# EUROPEAN PATENT SPECIFICATION

(11) **EP 2 643 917 B1**
(45) Date of publication and mention of the grant of the patent: **02.12.2026**
(21) Application number: 10859951.5
(22) Date of filing: 25.11.2010
(51) Int. Cl.: H01M 10/44, H01M 10/48, B60L 1/00, H02J 7/04, H02J 7/90, H02J 7/96, H01M 10/052

(54) **CONTEXT AWARE BATTERY CHARGING**
KONTEXTBEWUSSTE BATTERIEAUFLADUNG
CHARGE DE BATTERIE CONTEXTUELLE

(43) Date of publication of application: 02.10.2013
(73) Proprietor: Nokia Technologies Oy, 02610 Espoo (FI)
(72) Inventor: BERGQVIST, Rene Stig, DK-4420 Regstrup (DK); VALO, Kimmo Samuel, FI-20400 Turku (FI); TROBERG, Mikael Johannes, FI-24280 Salo (FI)
(74) Representative: Sayer, Robert David
(86) International application number: PCT/FI2010/050961
(87) International publication number: WO 2012/069690

(56) References cited:
- WO-A1-2010/084599
- JP-A- 2002 142 378
- JP-B2- 3 232 912
- US-A- 5 864 220
- US-A1- 2007 075 678
- US-A1- 2008 224 667
- US-A1- 2010 033 124
- US-A1- 2010 176 768
- US-B1- 6 268 715

## Description

### TECHNICAL FIELD

The present application relates generally to an intelligent battery charging technology, more specifically method and apparatus for smartly charging a battery-operated device based at least partially on a context of the device.

### BACKGROUND

Lithium-based rechargeable battery is conventionally charged by using Constant- Current, Constant- Voltage (CC-CV) method. The charging voltage rises rapidly to the battery cell upper voltage limit typically 4.2 Vpc (Voltage per Cell), and then maintained at that level. The cell current maintains constant with the rise of charging voltage and starts to decrease when the charging voltage hits the upper level limit. The charging current is cut off when it reaches a predetermined minimum current point which indicates a full charge.

All batteries have a limited lifespan. Charging rate of rechargeable battery has a great impact on length of lifespan of the battery. Fast charging causes increased Joule heating of the cell because of the higher currents involved and the higher temperature in turn causes an increase in the rate of the chemical conversion processes. Frequently fast charging will overstress the battery cells causing them to become weak until they eventually fail and shorten the battery life. The way of charging directly affects the charging rate and further the battery lifetime. In conventional charging process, charging behavior is normally independent of other external parameters than battery type and temperature. Nowadays battery has been widely used in all kinds of battery powered end user devices, for example, portable mobile phone, phone with car kit, camera, laptop etc. Short battery life will cause bad user experience. It is expensive to frequently replace a rechargeable battery.

US 2008/224667 discloses a method for charging a lithium-ion secondary battery designed so as to fully charge, with a voltage of the lithium-ion secondary battery being limited to a set voltage. JP 2002142378 discloses an apparatus and a method for charging a secondary battery where ease of use is maintained and degradation of the secondary battery is restrained. US 2010/176768 discloses a charging control circuit for a secondary battery and a charging controller using same.

### SUMMARY

The invention is defined by the claims.

According to a first aspect of this specification, there is provided an apparatus comprising monitoring unit and a charging control unit. The monitoring unit is configured to monitor at least one data acquisition source of a device operated by a rechargeable battery and estimate a context of the device based on data acquired from the at least one data acquisition source. The charging control unit is configured to dynamically adjust charging voltage and charging current applied to the rechargeable battery based on the estimated context of the device acquired from the monitoring unit. The battery comprises at least one battery cell.

According to a second aspect of this specification, there is provided a method comprising monitoring at least one data acquisition source of a device operated by a rechargeable battery and estimate a context of the device based on data acquired from the at least one data acquisition source; and dynamically adjusting charging voltage and charging current applied to the rechargeable battery based on the estimated context of the device acquired from the monitoring unit. The battery comprises at least one battery cell.

According to a third aspect of this specification, there is provided an apparatus comprising at least one processor and at least one memory including computer program code. The, at least one, memory and the computer program code are configured to, with the at least one processor, cause the apparatus to perform at least monitoring at least one data acquisition source of a device operated by a rechargeable battery and estimate a context of the device based on data acquired from the at least one data acquisition source, and dynamically adjusting charging voltage and charging current applied to the rechargeable battery based on the estimated context of the device acquired from the monitoring unit. The battery comprises at least one battery cell.

According to fourth aspect of this specification, there is provided an apparatus comprising means for monitoring at least one data acquisition source of a device operated by a rechargeable battery and estimate a context of the device based on data acquired from the at least one data acquisition source, and means for dynamically adjusting charging voltage and charging current applied to the rechargeable battery based on the estimated context of the device acquired from the monitoring unit. The battery comprise at least one battery cell.

### BRIEF DESCRIPTION OF THE DRAWINGS

For a more complete understanding of example embodiments of the present invention, reference is now made to the following descriptions taken in connection with the accompanying drawings in which:
Figure 1 is an illustration of a device powered by a rechargeable battery comprising an apparatus for context aware charging the rechargeable battery according to an example embodiment;
Figure 2 (a) is a flow diagram illustrating a method of conditional charging in terms of battery voltage according to an example embodiment;
Figure 2 (b) is a flow diagram illustrating a method of conditional charging in terms of ambient temperature of battery according to an example embodiment; and
Figure 3 provides graphical illustration of (a) battery voltage versus time in conventional CC-CV charging, and (b) battery current versus time during the conventional CC-CV charging, according to an example embodiment.
Figure 4 is a flow diagram showing a method of context aware charging according to an example embodiment.

### DETAILED DESCRIPTON OF THE DRAWINGS

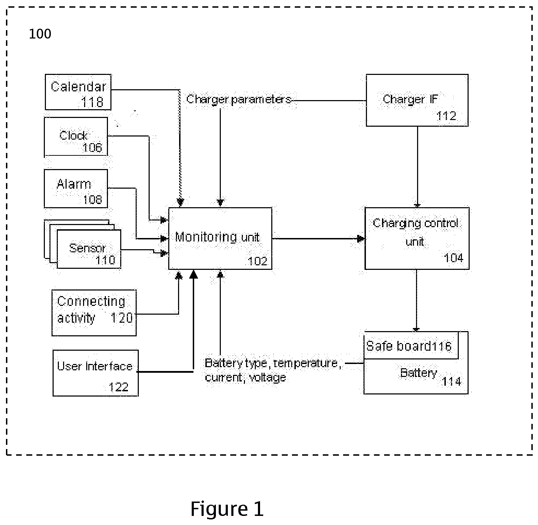

An example embodiment of the present invention and its potential advantages are understood by referring to Figure 1 through Figure 4 of the drawings.

Figure 1 is an illustration of a device 100 powered by a rechargeable battery 114 (generally called thereafter the battery) comprising an apparatus for context aware charging the battery according to an example embodiment. The device comprises a monitoring unit 102 configured to monitor all parts of the device and the corresponding activities, a charging control unit 104 configured to control charging voltage and charging current from a charger interface (IF) 112 to the battery 114 based on the information acquired from the monitoring unit 102. The charger IF 112 may be in different types, such as a car power charger, a wall plug charger, or micro USB charger for example. For car mode charging, it can be identified by monitoring a motion sensor 110, car connection activity 120 for example, Bluetooth, Wireless Local Area Network (WLAN) or 3^{rd} Generation connection or a car power adapter 112. The unit 102 monitors a clock 106, an alarm 108, at least one sensor 110, a user's calendar 118, a connection activity 120, or a user interface 122 of the device. The monitoring unit 102 may also communicate with charger IF 112 and the battery 114 comprising at least one battery cell, and monitor charging parameters, for example, voltage, current or temperature etc., or identify the type of battery. The battery 114 comprises a safety board 116 configured to monitor charging/discharging of battery and prevent dangerous things from happening based on different secure standards. Obviously, all different secure standards overrule all charging algorithms. The device 100 may be any battery powered device, for example, a laptop, mobile phone, personal assistant device operated by a battery.

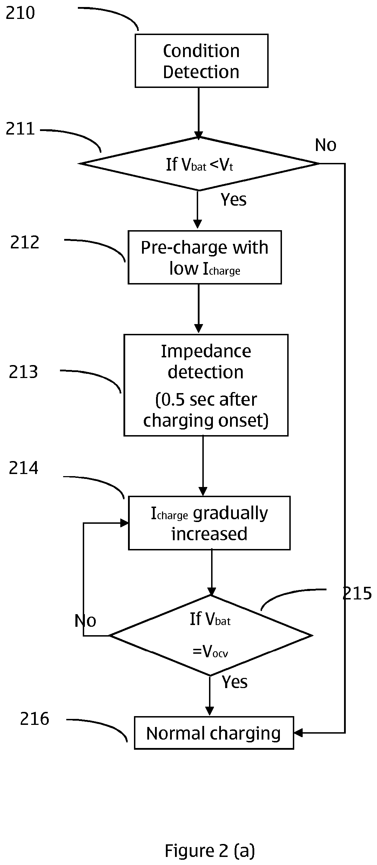

Figure 2 (a) is a flow diagram illustrating a method of conditional charging in terms of battery voltage according to an example embodiment. In the example embodiment, the condition of the battery 114 is monitored by the monitoring unit 102 in step 210 when the charger IF 112 is attached to the battery 114. If it is noticed in step 211 that the battery on-load voltage falls below a predetermined threshold voltage *Vₜ,* for example, battery cut-off voltage (~2.5 V for a lithium-based battery but varies with manufacturers), the battery is over-discharged and is considered of low voltage. The battery is then pre-charged with a low charging current *I_{charge}* in step 212. For a lithium-based rechargeable battery, charging rate from 0.2 C to 0.7 C is normal accepted to start charging with according to industry standard, where "C" represents the battery capacity/1hour. For instance, *I_{charge}* =700 mA for a 1000mAh battery capacity. Even though a higher charging rate 0.7 C is allowed, an over-discharge restoration by fast charging will cause a potential damage to the battery. A pre-charging function is normally preferred. Depending upon the depth of over discharge, the battery capacity may be recovered by a very careful recharging with a low charging current *I_{charge}.* From safety point of view, a pre-charging initiated with a low current is often used for high capacity batteries. If there is no corresponding rise in the battery voltage it indicates that there is possibly a short circuit in the battery. This can be identified by detecting an existence of internal resistance in the battery.

In practice, all real batteries have an internal resistance or impedance *Rᵢₙ* depending on the battery chemistry used which cannot be avoided. When *I_{charge}* is applied to a rechargeable battery, the battery voltage is jumped from a no-load floating voltage to a pseudo-voltage contributed by *Rᵢₙ* only. According to the basic Ohm's law , ${R}_{in} = {U}_{jump} / {I}_{0} ,$ wherein *Uⱼᵤₘₚ* is the voltage jump from a no-load floating voltage to a pseudo-voltage contributed only by *Rᵢₙ* when an initial charging current *I₀* is supplied. In an example embodiment, the voltage jump could happen 0.5 second after charging onset and the battery internal impedance *Rᵢₙ* is detected in step 213. If a fast charging is required, the battery voltage increases much faster because of a sudden increase of the charging current so that the effect of *Rᵢₙ* is overridden. The voltage drop on *Rᵢₙ* needs to be considered when no charging current is applied on the battery. When *I_{charge}* reaches to the termination current indicating that the battery is fully charged, the voltage drop is normal very small and may be ignored. The internal resistance *Rᵢₙ* increases with the age of a battery, but for most battery types ranges from a fraction of an ohm to a few ohms. It is preferable to estimate *Rᵢₙ* each charging time.

The charge current *I_{charge}* is then increased to a normal charging rate in step 214, for example, the highest allowable *I_{charge}* 0.7C for CC charging process. The battery voltage *V_{bat}* is also correspondingly increasing with the charging current. When the battery voltage *V_{bat}* hits the optimal constant voltage *V_{ocv}* in step 215, a normal CV charging process starts in step 216. For normal CV charging, *V_{ocv}* is normally less than the upper limit of the voltage per cell, preferably as close to the limit as possible, for example, 4.2 Vpc for lithium-based battery. The charging current then starts to drop until the termination current is reached which indicates the battery is fully charged.

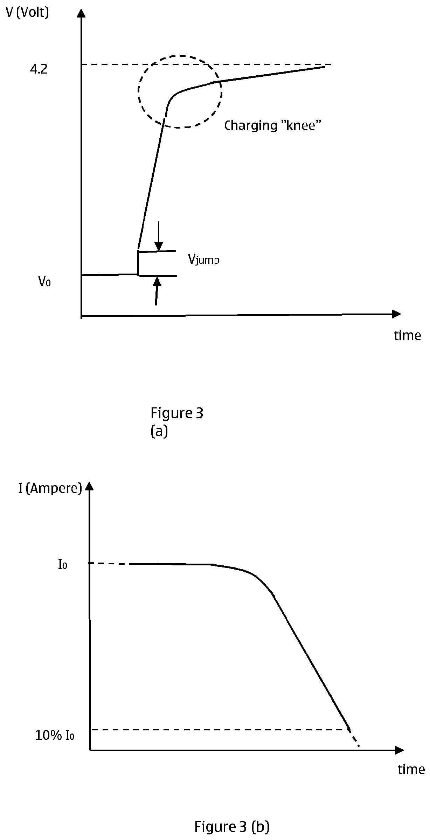

Figure 3 provides graphical illustration of (a) battery voltage versus time in conventional CC-CV charging and (b) battery current versus time during the conventional CC-CV charging, according to an example embodiment. It is desirable to have a more lenient charging start and more lenient charging "knee". The charging "knee" corresponds to the transient period with high voltage high current as indicated in Figure 3 (a) and has high stress on the battery cell. For lenient charging, instead of increasing the charging current suddenly to a maximum allowable charging current for CC charging, the charging current *I_{charge}* can be gradually increased in step 214. The optimal constant voltage *V_{ocv}* is not necessarily as close to the upper limit of the voltage per cell and may be predefined, for example, *V_{ocv}* is such that the battery is almost 80% charged after the voltage drop on *Rᵢₙ* is considered for example. For instance, for charging a 3.1 Vpc lithium-based battery with an upper limit of 4.2 Vpc and 0.1 V voltage drop on *Rᵢₙ,* it is 80% charged when the battery voltage per cell is 4.0 V. This way the charging current starts to drop earlier than the conventional CC-CV charging until reaches to the termination current. A lenient charging limits the impact of fast volume expansion or contraction in electrodes, and eliminates combination of high current high voltage otherwise present at charging knee. In addition, lenient charging causes lower ohmic losses that are especially important when local temporary stress phenomena presents in the battery (i.e. local places with higher temperature increases local mechanical expansion versus remaining less expanded material). Lenient charging also allows more smooth transition which prevents local stress breaks (i.e. difference between elastic and plastic deformation). The lenient charging takes a longer time to fully charge a battery compared to the conventional charging. Under the certain circumstances for example user does not need the battery-operated device immediately or it is not necessary that the battery is fully charged, lenient charging prolongs battery's life without loss of user's experience.

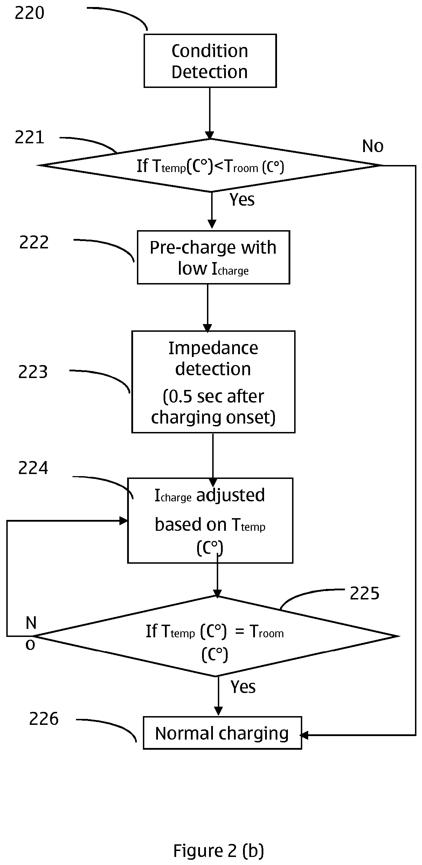

Figure 2 (b) is a flow diagram illustrating a method of conditional charging in terms of ambient temperature of battery according to an example embodiment. In the example embodiment, a temperature sensor 110 is monitored in step 220. A high ambient temperature can take a battery beyond its safe operating temperature limits while a low battery temperature reduces charge acceptance even though a full charge is applied to the battery. If it is detected in step 221 that the ambient temperature of the battery *Tₜₑₘₚ* is lower than a predetermined range or value of room temperature (for example between 20°C-30°C or at 27°C), the battery is pre-charged with a low charging current in step 222 before a normal charging starts. A charging process increases Joule heating of the battery because of charging current and internal resistance involved and cause an increase of battery temperature. As indicated before, the internal impedance of the battery *Rᵢₙ* is able to be measured shortly after the pre-charging starts in step 223. The battery temperature *Tₜₑₘₚ* will increase with pre-charging. The charging current *I_{charge}* is then adjusted based on the change of battery temperature *Tₜₑₘₚ* in step 224. If the battery temperature reaches to a normal room temperature in step 225, a normal charging process will starts in step 226. Otherwise, the charging current continuously adjusts itself based on the battery temperature. If the battery temperature is such that the battery has an acceptable charge acceptance in step 221, for example, at room temperature, the normal charging process in step 226 will start immediately. Obviously conditional charging will take longer time than convention charging without considering any real conditions of battery, but battery gets less chemical stress from high charging current and then lifetime prolongs. As wear of the battery is decreased with conditional charging, the internal resistance of the cell will be kept low and the retained capacity will maintain an optimal discharge time over a longer period.

Nowadays, battery charging is normally controlled by voltage, current and temperature. The charging behavior of the conventional CC-CV charging method is independent of other external parameters than battery type and temperature. There may be regulation of charging parameters during charging. However they are fixed (e.g. valid in ranges jumping between levels) and have not taken other conditions than temperature and voltage into account. Even the temperature has a rough adjusting granularity, which does not provide enough accuracy on the regulation of the charging parameters.

From the user's aspect, most of users charge predominantly over night. It is easy to know from a clock 106 when it is night. It is therefore possible to have an extra lenient charging without loss of any user experience. Assuming user does not need the device during night, there is no need to provide full charging rate for over night charging as user experience does not differ whether charging takes 1½ or 6 hours. If battery lifetime can be extended that way, it would improve user experience of quality and enhance brand recognition over time. A mechanism to detect user's relevant activity at nighttime may be provided and initializes a faster charging only when it is needed. Charging may also be accelerated in the cases where user is assumed to use charger only a short time. An input from a wakeup alarm clock of the device may be used for a reasonable charging plan and makes sure the battery in the device is fully charged at wakeup time but before that it may have a lower target voltage. It is desirable to adjust charging parameter smartly and improve battery life by making a gentle charging when user is not active.

From one aspect of ambient environment of charging, it is often known where the battery is charged by monitoring such as a motion sensor 110, a car connection activity 120 e.g. Bluetooth connection, or a charger recognizing charging adapter 112 for example. Maintenance charging is normally needed to substantially maintain a full capacity of battery and is triggered when the battery voltage reaches to a particular level. If it is known that the car journey is around 1-2 hours or driving a car is an occupation to the user, it may be beneficial to reduce the maintenance charging triggering voltage or the voltage when the CC charging ends (or the voltage when the CV charging starts).

From another aspect of ambient environment of charging, it is also often known by monitoring a temperature sensor 110 that the temperature of charging environment. Charging is in an extra electrochemical and mechanical stress condition for the battery when the ambient temperature is near 0°C. Charging algorithms today only limit the upper limit of voltage per cell for low temperature charging, but charging current is much more important especially near fully discharged and charged condition. It may not be smart to regulate the charging current in a full step as this would cause increased stress as mentioned above. It is desirable to have an intelligent charging scheme to prolong battery life by adjusting charging parameters gradually without loss of user's experience.

Context aware charging takes into account user's behavior and ambient environment of charging to adjust charging current accordingly. User's behavior may be detected by monitoring different date acquisition units, for example, clock 106, alarm 108, user calendar 118, sensors 110, connection activity 120, etc. A learning algorithm may also be used for adaptation.

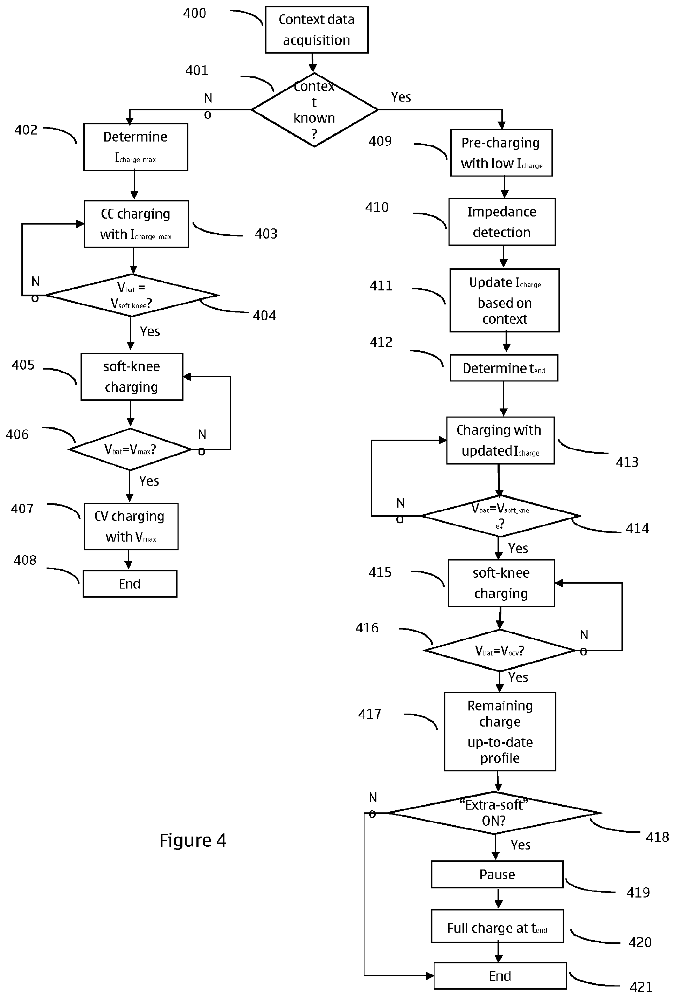

Figure 4 is a flow diagram showing a method of context aware charging in compare to that of context unknown charging according to an example embodiment. In step 400, the monitoring unit 102 communicates with different data acquisition units and acquires different information. Without knowing any context about ambient of the battery in step 401, there would be no pre-charging process and the charging current voltage will be regulated to a maximum value. In step 402, a maximum charging current *I_{charge_max}* is determined and a CC charging with *I_{charge_max}* starts in step 403. Charging with a soft "knee" does not need awareness of ambience. It is desirable to avoid unnecessary high voltage high current occasion as much as possible to reduce the chemical stress on the battery cell during charging. For soft "knee" charging, the voltage is regulated or increased gently until it reaches to the upper limit of battery voltage *Vₘₐₓ* for conventional CV charging or *V_{ocv}* for lenient charging. How gently the voltage increases may be defined by user. A soft "knee" voltage *V_{soft_knee}* in step 404 is a particular voltage triggering a soft "knee" charging in step 405. When *V_{bat}* reaches to the upper limit of battery voltage *Vₘₐₓ* in step 406, a CV charging starts with a constant *Vₘₐₓ* in step 407 and a reduced charging current to maintain a full energy in the battery until user unplugs charger IF 112 from Charging Control unit 104.

If the device is aware of any information that may affect the regulation of charging parameters, e.g. battery voltage, battery size and type, current time, alarm clock setting, charging mode or environment, user's activity setting in calendar, in step 401, a pre-charging with a low *I_{charge}* will start in step 409 as described before and the internal impedance of the battery is measured at the initial voltage jump in step 410. The charging current *I_{charge}* is then updated based on the aware context relating to charging current regulation in step 411. There are many factors that may affect charging current *I_{charge}* intelligently. According to an example embodiment, charging current is defined by ${I}_{ch arg e} = {I}_{ps} \times {F}_{cbat} \times {F}_{temp} \times {F}_{soc} \times {F}_{night} \times {F}_{knee} ,$ wherein *Iₚₛ* is the maximum current of power supply from charger IF 112. Five different factors are considered in the determination. Lower temperature increases charging time and reduces charge acceptance. *Fₜₑₘₚ* is a factor for correcting the effects from temperature on the charging current, for example, *Fₜₑₘₚ* is equal to 0.5 when temperature is at 0°C or greater than 45°C, 1 at 15-30°C, 0.8 when temperature is greater than 30°C, and 0 when temperature is greater than maximum charging temperature limit (for example 60°C). *F_{soc}* is the factor for State of Charge (SOC). The SOC indicates the remaining charge of the battery and is affected by many different reasons, such as temperature or age of the battery. For example, the battery may not necessarily receive a full charge even though it is indicated fully charged at a low temperature; or a fully charging aged cell may have an effective charge capacity of 80%. The SOC also affects charging efficiency so that the charging current needs to be rated accordingly. The factor *F_{soc}* may be linearly regulated from 0.5 at 3.4V floating voltage (i.e. no-load battery voltage) to 1 at 3.7V floating voltage. This may be overridden if fast charging is requested. *F_{cbat}* is a correction factor for maximum allowed charging current for battery. For a lithium-based battery with *Iₚₛ* × *F_{cbat}* = 950 mA in maximum, it may not tolerate a higher charge current than 950 mA. Essentially this may be considered where a larger span of batteries could be accommodated, for example 800 mAh to 2000 mAh battery capacities with charging currents of chargers from 400 mA to 1500 mA. The factor of *F_{night}* takes into account of user's behaviour. If it is noticed from the clock 106 that it is in the middle of the night and the user has no indication of specific plan in the calendar 118, *I_{charge}* may be adapted if the battery float voltage is greater than 4.0 V by reducing the charging current by half, i.e. *Fnight=0.5. Fₖₙₑₑ* is an adaptive factor to smoothen the charging "knee" for lenient charging. Depending on how soft the charging "knee" is, it may be linearly regulated from 1 at 4.0V to 0.5 at 4.2 for example. Based on the information of *I_{charge}* and battery capacity BatCap, it is possible to estimate how long it would take to fully charge the battery in step 412, i.e., *t_{end}*=BatCap/*I_{charge}.* Maintenance charging is a balance between having sufficient energy after full charge and essentially not wearing out the battery heavily. This especially applies for people leaving the device in the charger during day time, for example, for taxi drivers. By using context aware smart charging, the maintenance charging can be adapted or completely avoided so that the battery is not wearing out heavily by long time high voltage high current during maintenance charging.

Context awareness charging continues with the updated *I_{charge}* in step 413 until the battery voltage reaches to *V_{soft_knee}* in step 414 which triggers soft knee charging in step 415. If the battery voltage hits a predefined *V_{ocv}* in step 416, *I_{charge}* maintains and CV charge process starts until the battery voltage hits the upper limit in step 417. If there is no need for an extra lenient charging in step 418, the charging process ends in step 421. Otherwise, if it is detected that the battery-operated device 100 is not needed by user based on the up-to-date profile before *t_{end}* which is still a long time ahead, for example, the user is sleeping or in long-term driving, the charging process will pause in step 419 until shortly before the expected charging process ends. This is to minimize maintenance charge cycles between the pause and restart of charging. The floating voltage of the battery starts to drop after the charging process is terminated due to self-discharge. A normal CC-CV charging process starts and make sure a full charged battery is ready at *t_{end}* in step 420.

In an example of context aware charging scenario, it is aware that it is a mid of day, a battery with a capacity of 1200 mAh and an upper limit of 4.2 Vpc is in room-temperature, the battery voltage is low and the floating voltage without load is 3.5 V, and the battery will be charged with an AC-10 adapter with a maximum current of power supply 1200 mA. It is defined by the user that *Fₜₑₘₚ =* 1 (for room temperature), *F_{soc} =* 0.85, *F_{night}*=1 (because of day time charging), *Fₖₙₑₑ*=1 (assume this is a normal charging process without soft "knee"). According to the industry standard, a 0.7C charging rate for CC charging is allowed for a battery with a capacity of 1200 mAh. Therefore, the maximum charge current is *Iₚₛ* × *F_{cbat}* = 0.7×1200mA, and the allowed charging current is rated by *F_{cbat}* = *Iₚₛ* × *F_{cbat}* / 1200 which is equal to 0.7 for this case. First onset of charge calculates impedance from the initial voltage increase measured after for example 0.5 seconds, and then *I_{charge}* is defined as 0.7 ×1200×1×0.85×1×1= 714 mA. The battery voltage increases during CC charging at a constant current of *I_{charge}* until it hits 4.2 Vpc. Charging with CV starts then until *I_{charge}* is less than a termination current, e.g. 10% of the maximum charging current, *Iₚₛ* × *F_{cbat}* /10. Assume soft "knee" charging is defined and *Fₖₙₑₑ*=0.5, *V_{ocv}*= 4.2 Vpc, the charge current is linearly reduced by half (i.e. 357 mA) maintains during CC charging until battery voltage reaches 4.2 Vpc. The charger starts charging the battery at a contact voltage of 4.2 V until the voltage drops to 10% of the initial maximum charging current *Iₚₛ* × *F_{cbat}* / 20 indicating the battery is fully charged.

In another example of context aware charging scenario, assume it is 23:00 in the night, a battery with a capacity of 1500 mAh and an upper limit of 4.2 Vpc in room-temperature is charged by an AC-10 charger with a maximum current of power supply 1200 mA. Before charging the battery is low and the no-load floating voltage is 3.5 V. According to the industry standard, a 0.7 C charging rate is allowed for the battery with a capacity of 1500 mAh. The maximum charging current is determined by *Iₚₛ* × *F_{cbat}* = 0.7 ×1500. The maximum allowed charged current should be rated by *F_{cbat}* = *Iₚₛ* × *F_{cbat}* / 1200 which is equal to 0.87 for this case. Moreover, it is defined by the user that *Fₜₑₘₚ* = *1, Fsoc =* 1, *F_{night}*=0.5 (night time), *Fₖₙₑₑ*=0.5, *V_{ocv}* = 4.0 Vpc (battery is 80% charged) for soft "knee" charging. First onset of charge calculates impedance from the initial voltage increase measured after 0.5 seconds. The charging rate is determined by 0.87×1200×1×1×1×0.5 = 522 mA. CC charging with *I_{charge} =* 522 mA starts until the battery voltage reaches to 4.0Vpc, and then charging pauses because the user does not intend to use the device 100 within a short time, for example, the user is sleeping. Just before the user wakes up, continue charge the battery with *I_{charge}* until the battery voltage hits 4.2 Vpc. The battery continues to be charged by CV with *I_{charge}* dropping until the current has been dropped to 10% of the initial maximum charging current which is *Iₚₛ* × *F_{cbat}* / 20 . As a rule of thumb, for the battery defined above and being halfway charged to 3.8V, the charging completion would likely take around 2 hours.

In some example embodiments, user may also indicate through user interface 122 when the device under charging is expected to be fully charged or which type of charging the user prefers, such as normal charging, conditional charging, lenient charging, context aware charging, or fast charging for example.

Without in any way limiting the scope, interpretation, or application of the claims appearing below, a technical effect of one or more of the example embodiments disclosed herein is to get a better user experience by providing best possible compromise between battery life and energy available. Another technical effect of one or more of the example embodiments disclosed herein is to allow adaptive trickle charging or avoid trickle charging completely with a context aware charging. Another technical effect of one or more of the example embodiments disclosed herein is that user will always have a full battery in the morning or when it is needed along with other power management initiatives using night awareness to reduce power consumption.

Embodiments of the present invention may be implemented in software, hardware, application logic or a combination of software, hardware and application logic. The software, application logic and/or hardware may reside in the battery-operated device. If desired, part of the software, application logic and/or hardware may reside on a wireless network service. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted in Figure 1. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects are set out in the independent claims, other aspects comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

## Claims

1. An apparatus, comprising:
a monitoring unit (102) configured to monitor at least one data acquisition source of a device (100) operated by a rechargeable battery (114) and estimate a context of the device based on data acquired from the at least one data acquisition source;
a charging control unit (104) configured to dynamically adjust charging voltage and charging current applied to the rechargeable battery based on the estimated context of the device acquired from the monitoring unit,
wherein the rechargeable battery comprises at least one battery cell; and
**characterised in that** the context of the device comprises an ambient charging environment of the rechargeable battery (114), the ambient charging environment indicating where the battery is charged.

2. The apparatus of claim 1, wherein a determination of where the battery is charged is based on monitoring one or more of a motion sensor, a car connection activity, and/or recognition of a charging adapter.

3. The apparatus of any preceding claim, wherein the charging voltage and charging current are controlled such that:
a low pre-charging current is applied to the battery until the battery voltage reaches a first voltage;
in response to the battery voltage reaching the first voltage, the battery voltage is increased by applying current charging, the value of the current being greater than the pre-charging current and lower than the maximum charging current of a power supply providing the charging voltage and charging current to the device, the value being determined based on the estimated context, until the battery voltage reaches a second, higher voltage which is lower than the upper limit of the battery;
in response to the battery voltage reaching the second, higher voltage, if it is detected based on the estimated context that the device is not needed by the user immediately, charging is paused until before a time at which the device is expected to be needed; and
charging is subsequently continued using constant current constant voltage charging to ensure the battery is fully charged at the time at which the device is expected to be needed.

4. The apparatus of any preceding claim, wherein the charging control unit (104) is further configured to determine the end of expected charging period.

5. The apparatus of any preceding claim, wherein the context of the device (100) further comprises at least one of temperature, a user's activity indicating the user's need to use the device, and remaining voltage of the rechargeable battery (114).

6. The apparatus of claim 5, wherein the context of the device comprises the user's activity and the ambient charging environment.

7. The apparatus of any preceding claim, wherein the constant current charging process comprises a maximum charging voltage, and the charging control unit (104) is further configured to determine the maximum charging voltage based at least on the internal impedance of the battery (114) and the constant charging current.

8. The apparatus of claim 7, wherein the maximum charging voltage is such that the battery (114) is partially charged based on a predefined factor.

9. The apparatus of claim 8, wherein the charging process further comprising a pause when the expected charging period is longer than the charging period by a normal constant current constant voltage charging process, wherein the constant current of the normal constant current charging process is substantially equal to a predetermined highest allowable charging current, and the constant charging voltage of the normal constant voltage charging process is substantially equal to a predetermined upper limit voltage of the at least one rechargeable battery cell.

10. The apparatus of any preceding claim, wherein the at least one data acquisition source comprises at least one of: an alarm, a clock, a sensor, a user calendar, a user interface, or a connection activity.

11. The apparatus of any preceding claim comprising a mobile device.

12. The apparatus of any preceding claim, comprising:
at least one processor; and
at least one memory including computer program code;
wherein the at least one memory and the computer program code are configured to, with the at least one processor, cause the apparatus to perform at least the following:
monitoring the at least one data acquisition source of the device (100) operated by the rechargeable battery (114) and estimating the context of the device based on the data acquired from the at least one data acquisition source;
dynamically adjusting the charging voltage and the charging current applied to the rechargeable battery based on the estimated context of the device acquired from the monitoring unit;
wherein the context of the device comprises an ambient charging environment of the rechargeable battery (114), the ambient charging environment indicating where the battery is charged.

13. A method, comprising:
monitoring at least one data acquisition source of a device (100) operated by a rechargeable battery (114) and estimating a context of the device based on the data acquired from the at least one data acquisition source; and
dynamically adjusting charging voltage and charging current applied to the rechargeable battery based on the estimated context of the device,
wherein the rechargeable battery comprises at least one battery cell;
wherein the context of the device comprises an ambient charging environment of the rechargeable battery (114), the ambient charging environment indicating where the battery is charged.

14. A method according to claim 13, wherein the charging control unit (104) is further configured to determine an end of expected charging period and the rechargeable battery (114) is fully charged at the end of expected charging period.

15. A method according to claim 13 or claim 14, wherein the context of the device (100) further comprises at least one of temperature, remaining voltage of the rechargeable battery.

## Patentansprüche

1. Vorrichtung, umfassend:
eine Überwachungseinheit (102), die dazu konfiguriert ist, mindestens eine Datenerfassungsquelle eines Geräts (100), das mittels einer wiederaufladbaren Batterie (114) betrieben wird, zu überwachen und einen Kontext des Geräts auf der Grundlage von Daten, die aus der mindestens einen Datenerfassungsquelle erfasst werden, zu schätzen;
eine Ladesteuereinheit (104), die dazu konfiguriert ist, eine Ladespannung und einen Ladestrom, die an die wiederaufladbare Batterie angelegt werden, auf der Grundlage des von der Überwachungseinheit erfassten geschätzten Kontexts des Geräts dynamisch anzupassen,
wobei die wiederaufladbare Batterie mindestens eine Batteriezelle umfasst; und
**dadurch gekennzeichnet, dass** der Kontext des Geräts eine Umgebungsladeumgebung der wiederaufladbaren Batterie (114) umfasst, wobei die Umgebungsladeumgebung angibt, wo die Batterie geladen wird.

2. Vorrichtung nach Anspruch 1, wobei eine Bestimmung, wo die Batterie geladen wird, auf einer Überwachung von einem oder mehreren von einem Bewegungssensor, einer Autoverbindungsaktivität und/oder einer Erkennung eines Ladeadapters basiert.

3. Vorrichtung nach einem der vorhergehenden Ansprüche, wobei die Ladespannung und der Ladestrom derart gesteuert werden, dass:
ein niedriger Vorladestrom an die Batterie angelegt wird, bis die Batteriespannung eine erste Spannung erreicht;
in Reaktion darauf, dass die Batteriespannung die erste Spannung erreicht, die Batteriespannung durch Anwenden eines Stromladens erhöht wird, wobei der Wert des Stroms größer als der Vorladestrom und kleiner als der maximale Ladestrom einer Stromversorgung ist, die die Ladespannung und den Ladestrom an das Gerät bereitstellt, wobei der Wert auf der Grundlage des geschätzten Kontexts bestimmt wird, bis die Batteriespannung eine zweite, höhere Spannung erreicht, die niedriger als die obere Grenze der Batterie ist;
in Reaktion darauf, dass die Batteriespannung die zweite, höhere Spannung erreicht, falls auf der Grundlage des geschätzten Kontexts erkannt wird, dass das Gerät vom Benutzer nicht unmittelbar benötigt wird, das Laden pausiert wird, bis vor einen Zeitpunkt, zu dem das Gerät voraussichtlich benötigt wird; und
das Laden anschließend unter Verwendung eines Ladens mit konstantem Strom und konstanter Spannung fortgesetzt wird, um sicherzustellen, dass die Batterie zu dem Zeitpunkt, zu dem das Gerät voraussichtlich benötigt wird, vollständig geladen ist.

4. Vorrichtung nach einem der vorhergehenden Ansprüche, wobei die Ladesteuereinheit (104) ferner dazu konfiguriert ist, das Ende einer erwarteten Ladeperiode zu bestimmen.

5. Vorrichtung nach einem der vorhergehenden Ansprüche, wobei der Kontext des Geräts (100) ferner mindestens eines von einer Temperatur, einer Aktivität eines Benutzers, die den Bedarf des Benutzers angibt, das Gerät zu verwenden, und einer Restspannung der wiederaufladbaren Batterie (114) umfasst.

6. Vorrichtung nach Anspruch 5, wobei der Kontext des Geräts die Aktivität des Benutzers und die Umgebungsladeumgebung umfasst.

7. Vorrichtung nach einem der vorhergehenden Ansprüche, wobei der Konstantstrom-Ladevorgang eine maximale Ladespannung umfasst und die Ladesteuereinheit (104) ferner dazu konfiguriert ist, die maximale Ladespannung mindestens auf der Grundlage der Innenimpedanz der Batterie (114) und des konstanten Ladestroms zu bestimmen.

8. Vorrichtung nach Anspruch 7, wobei die maximale Ladespannung derart ist, dass die Batterie (114) auf der Grundlage eines vordefinierten Faktors teilweise geladen wird.

9. Vorrichtung nach Anspruch 8, wobei der Ladevorgang ferner eine Pause umfasst, wenn die erwartete Ladeperiode länger als die Ladeperiode durch einen normalen Ladevorgang mit konstantem Strom und konstanter Spannung ist, wobei der konstante Strom des normalen Konstantstrom-Ladevorgangs im Wesentlichen gleich einem vorbestimmten höchsten zulässigen Ladestrom ist und die konstante Ladespannung des normalen Konstantspannungs-Ladevorgangs im Wesentlichen gleich einer vorbestimmten oberen Grenzspannung der mindestens einen wiederaufladbaren Batteriezelle ist.

10. Vorrichtung nach einem der vorhergehenden Ansprüche, wobei die mindestens eine Datenerfassungsquelle mindestens eines von Folgendem umfasst: einen Alarm, eine Uhr, einen Sensor, einen Benutzerkalender, eine Benutzerschnittstelle oder eine Verbindungsaktivität.

11. Vorrichtung nach einem der vorhergehenden Ansprüche, die ein mobiles Gerät umfasst.

12. Vorrichtung nach einem der vorhergehenden Ansprüche, umfassend:
mindestens einen Prozessor; und
mindestens einen Speicher, der Computerprogrammcode umfasst;
wobei der mindestens eine Speicher und der Computerprogrammcode dazu konfiguriert sind, mit dem mindestens einen Prozessor die Vorrichtung zu veranlassen, mindestens Folgendes auszuführen:
Überwachen der mindestens einen Datenerfassungsquelle des Geräts (100), das mittels der wiederaufladbaren Batterie (114) betrieben wird, und Schätzen des Kontexts des Geräts auf der Grundlage der aus der mindestens einen Datenerfassungsquelle erfassten Daten;
dynamisches Anpassen der Ladespannung und des Ladestroms, die an die wiederaufladbare Batterie angelegt werden, auf der Grundlage des von der Überwachungseinheit erfassten geschätzten Kontexts des Geräts;
wobei der Kontext des Geräts eine Umgebungsladeumgebung der wiederaufladbaren Batterie (114) umfasst, wobei die Umgebungsladeumgebung angibt, wo die Batterie geladen wird.

13. Verfahren, umfassend:
Überwachen mindestens einer Datenerfassungsquelle eines Geräts (100), das mittels einer wiederaufladbaren Batterie (114) betrieben wird, und Schätzen eines Kontexts des Geräts auf der Grundlage der aus der mindestens einen Datenerfassungsquelle erfassten Daten; und
dynamisches Anpassen einer Ladespannung und eines Ladestroms, die an die wiederaufladbare Batterie angelegt werden, auf der Grundlage des geschätzten Kontexts des Geräts,
wobei die wiederaufladbare Batterie mindestens eine Batteriezelle umfasst;
wobei der Kontext des Geräts eine Umgebungsladeumgebung der wiederaufladbaren Batterie (114) umfasst, wobei die Umgebungsladeumgebung angibt, wo die Batterie geladen wird.

14. Verfahren nach Anspruch 13, wobei die Ladesteuereinheit (104) ferner dazu konfiguriert ist, ein Ende einer erwarteten Ladeperiode zu bestimmen, und die wiederaufladbare Batterie (114) am Ende der erwarteten Ladeperiode vollständig geladen ist.

15. Verfahren nach Anspruch 13 oder Anspruch 14, wobei der Kontext des Geräts (100) ferner mindestens eines von einer Temperatur, einer Restspannung der wiederaufladbaren Batterie umfasst.

## Revendications

1. Appareil, comprenant :
une unité de surveillance (102) configurée pour surveiller au moins une source d'acquisition de données d'un dispositif (100) fonctionnant au moyen d'une batterie rechargeable (114) et pour estimer un contexte du dispositif sur la base de données acquises à partir de l'au moins une source d'acquisition de données ;
une unité de commande de charge (104) configurée pour ajuster dynamiquement une tension de charge et un courant de charge appliqués à la batterie rechargeable sur la base du contexte estimé du dispositif acquis auprès de l'unité de surveillance,
dans lequel la batterie rechargeable comprend au moins une cellule de batterie ; et
**caractérisé en ce que** le contexte du dispositif comprend un environnement de charge ambiant de la batterie rechargeable (114), l'environnement de charge ambiant indiquant l'endroit où la batterie est chargée.

2. Appareil selon la revendication 1, dans lequel une détermination de l'endroit où la batterie est chargée est basée sur la surveillance d'un ou plusieurs parmi un capteur de mouvement, une activité de connexion de voiture, et/ou une reconnaissance d'un adaptateur de charge.

3. Appareil selon l'une quelconque des revendications précédentes, dans lequel la tension de charge et le courant de charge sont commandés de telle sorte que :
un courant de pré-charge faible est appliqué à la batterie jusqu'à ce que la tension de la batterie atteigne une première tension ;
en réponse à l'atteinte de la première tension par la tension de la batterie, la tension de la batterie est augmentée en appliquant une charge en courant, la valeur du courant étant supérieure au courant de pré-charge et inférieure au courant de charge maximal d'une alimentation électrique fournissant la tension de charge et le courant de charge au dispositif, la valeur étant déterminée sur la base du contexte estimé, jusqu'à ce que la tension de la batterie atteigne une seconde tension, plus élevée, qui est inférieure à la limite supérieure de la batterie ;
en réponse à l'atteinte de la seconde tension, plus élevée, par la tension de la batterie, s'il est détecté sur la base du contexte estimé que le dispositif n'est pas nécessaire à l'utilisateur immédiatement, la charge est mise en pause jusqu'à un instant précédant l'instant auquel le dispositif est censé être nécessaire ; et
la charge est ensuite poursuivie en utilisant une charge à courant constant et à tension constante pour garantir que la batterie est complètement chargée à l'instant auquel le dispositif est censé être nécessaire.

4. Appareil selon l'une quelconque des revendications précédentes, dans lequel l'unité de commande de charge (104) est en outre configurée pour déterminer la fin d'une période de charge prévue.

5. Appareil selon l'une quelconque des revendications précédentes, dans lequel le contexte du dispositif (100) comprend en outre au moins l'un parmi une température, une activité d'un utilisateur indiquant le besoin de l'utilisateur d'utiliser le dispositif, et une tension résiduelle de la batterie rechargeable (114).

6. Appareil selon la revendication 5, dans lequel le contexte du dispositif comprend l'activité de l'utilisateur et l'environnement de charge ambiant.

7. Appareil selon l'une quelconque des revendications précédentes, dans lequel le processus de charge à courant constant comprend une tension de charge maximale, et l'unité de commande de charge (104) est en outre configurée pour déterminer la tension de charge maximale sur la base au moins de l'impédance interne de la batterie (114) et du courant de charge constant.

8. Appareil selon la revendication 7, dans lequel la tension de charge maximale est telle que la batterie (114) est partiellement chargée sur la base d'un facteur prédéfini.

9. Appareil selon la revendication 8, dans lequel le processus de charge comprend en outre une pause lorsque la période de charge prévue est plus longue que la période de charge par un processus normal de charge à courant constant et à tension constante, dans lequel le courant constant du processus normal de charge à courant constant est sensiblement égal à un courant de charge maximal admissible prédéterminé, et la tension de charge constante du processus normal de charge à tension constante est sensiblement égale à une tension limite supérieure prédéterminée de l'au moins une cellule de batterie rechargeable.

10. Appareil selon l'une quelconque des revendications précédentes, dans lequel l'au moins une source d'acquisition de données comprend au moins l'un parmi : une alarme, une horloge, un capteur, un calendrier d'utilisateur, une interface utilisateur, ou une activité de connexion.

11. Appareil selon l'une quelconque des revendications précédentes comprenant un dispositif mobile.

12. Appareil selon l'une quelconque des revendications précédentes, comprenant :
au moins un processeur ; et
au moins une mémoire comprenant un code de programme informatique ;
dans lequel l'au moins une mémoire et le code de programme informatique sont configurés pour, avec l'au moins un processeur, amener l'appareil à réaliser au moins ce qui suit :
surveiller l'au moins une source d'acquisition de données du dispositif (100) fonctionnant au moyen de la batterie rechargeable (114) et estimer le contexte du dispositif sur la base des données acquises à partir de l'au moins une source d'acquisition de données ;
ajuster dynamiquement la tension de charge et le courant de charge appliqués à la batterie rechargeable sur la base du contexte estimé du dispositif acquis auprès de l'unité de surveillance ;
dans lequel le contexte du dispositif comprend un environnement de charge ambiant de la batterie rechargeable (114), l'environnement de charge ambiant indiquant l'endroit où la batterie est chargée.

13. Procédé, comprenant :
surveiller au moins une source d'acquisition de données d'un dispositif (100) fonctionnant au moyen d'une batterie rechargeable (114) et estimer un contexte du dispositif sur la base des données acquises à partir de l'au moins une source d'acquisition de données ; et
ajuster dynamiquement une tension de charge et un courant de charge appliqués à la batterie rechargeable sur la base du contexte estimé du dispositif,
dans lequel la batterie rechargeable comprend au moins une cellule de batterie ;
dans lequel le contexte du dispositif comprend un environnement de charge ambiant de la batterie rechargeable (114), l'environnement de charge ambiant indiquant l'endroit où la batterie est chargée.

14. Procédé selon la revendication 13, dans lequel l'unité de commande de charge (104) est en outre configurée pour déterminer une fin d'une période de charge prévue et la batterie rechargeable (114) est complètement chargée à la fin de la période de charge prévue.

15. Procédé selon la revendication 13 ou la revendication 14, dans lequel le contexte du dispositif (100) comprend en outre au moins l'un parmi une température, une tension résiduelle de la batterie rechargeable.
